# NEUE EUROPÄISCHE PATENTSCHRIFT

(11) **EP 0 524 334 B2**
(45) Veröffentlichungstag und Bekanntmachung des Hinweises auf die Entscheidung über den Einspruch: **05.02.2003**
(45) Hinweis auf die Patenterteilung: 30.11.1994
(21) Anmeldenummer: 91112441.0
(22) Anmeldetag: 24.07.1991
(51) Int. Cl.: A61C 1/00

(54) **Wasserversorgungseinrichtung für einen zahnärztlichen Arbeitsplatz**
Water supply installation for a dental work station
Installation d'alimentation d'eau pour un poste de travail dentaire

(43) Veröffentlichungstag der Anmeldung: 27.01.1993
(73) Patentinhaber: SIEMENS AKTIENGESELLSCHAFT, 80333 München (DE)
(72) Erfinder: Frey, Hans-Peter, W-6800 Mannheim (DE); Kratochwilla, Hans-Michael, W-6143 Lorsch (DE)
(74) Vertreter: Sommer, Peter

(56) Entgegenhaltungen:
- EP-A- 0 111 249
- EP-A- 0 388 367
- EP-B- 0 098 419
- BR-C- 7 803 629
- DE-A- 2 032 640
- DE-A- 2 915 806
- DE-A- 3 032 475
- DE-A- 3 916 743
- DE-C- 3 901 320
- DIN 1988, Teil 4, "Technische Regeln für Trinkwasserinstallationen (TRWI)",Dez.1988
- Firmenprospekt der Firma Hierner-Pumpen Trennmat Systemtrenner nach DIN 1988
- DIN 1988, Teil 5

## Beschreibung

Die Erfindung bezieht sich auf eine Wasserversorgungseinrichtung für einen zahnärztlichen Arbeitsplatz entsprechend dem Oberbegriff des Patentanspruches 1.

Die technischen Regeln für Trinkwasserinstallation schreiben zum Schutz des Trinkwassers das Einhalten bestimmter Sicherheitsmaßnahmen bei Wasserinstallationen vor. Damit soll unter anderem vermieden werden, daß von einer Entnahmestelle verunreinigtes Wasser in das öffentliche Trinkwassernetz zurück fließen kann, welches dann anschließend einem anderen Verbraucher als Trinkwasser wieder zugeführt wird. Die Gründe und vorgeschriebenen Sicherheitsmaßnahmen zur Verhinderung von Rückfluß sind im einzelnen in der DIN 1988, Teil 4 vom Dezember 1988 festgelegt. Diese Vorschrift besagt unter anderem, dass Entnahmestellen und Apparate, von denen eine Beeinträchtigung oder Gefährdung durch das veränderte Trinkwasser ausgehen kann, durch Einzel- oder Sammelsicherung abgesichert sein müssen. Als eine von mehreren Möglichkeiten wird in dieser Vorschrift der freie Auslauf empfohlen, bei dem ein definierter Sicherheitsabstand zwischen Unterkante des Wasserauslaufes und des höchstmöglichen Wasserspiegelns vorgeschrieben ist.

Ein zahnärztlicher Arbeitsplatz, wie z.B. aus der EP-A-0 111 249 bekannt, enthält Gerätschaften, bei denen der in den vorgenannten DIN-Normen geforderte Sicherheitsabstand zwischen Entnahmestelle und Abfluß eingehalten werden kann, so z.B. bei der Rundspülung einer Speischalenanordnung oder beim Zulauf für eine Mundspülglasfülleinrichtung. Bei anderen Gerätschaften, wie Bohr- oder Spritzhandstücke, kann dieser Sicherheitsabstand nicht eingehalten werden, da dort keine feste Zuordnung zwischen einer Entnahmestelle, also der Austrittsstelle des Wassers, und einem Abfluß gegeben ist.

In der DE-3 916 743 A1 wird eine Druckwasserversorgungseinrichtung für zahnärztliche Arbeits- oder Laborplätze beschrieben, bei der zur Vermeidung eines Rücksaugens von kontaminiertem Wasser in die Frischwasserzuleitung vorgeschlagen wird, in die Zuleitung vor der Auslaßöffnung eine Freifallstrecke, wie in DIN 1988 empfohlen, vorzusehen. Mit dieser Freifallstrecke wird die Wasserabgabestelle vom Frischwassernetz getrennt. Die konstruktive Lösung sieht vor, das Wasser über eine Freifallstrecke in einen Vorratsbehälter zu leiten und von dort aus über ein Rückschlagventil in einen Pumpenbehälter strömen zu lassen, der über ein Schaltventil mit einer Druckluftquelle verbunden wird und so das unter Druck stehende Wasser aus dem Pumpenbehälter herausdrückt. Der Zulauf des Frischwassers in den Vorratsbehälter wird über eine Schwimmereinrichtung gesteuert, die ähnlich einem aus dem Sanitärgebiet bekannten WC-Spüler aufgebaut ist.

Die bekannten Lösungen weisen eine Reihe von Nachteilen auf. So ist die Einrichtung mit einem mit Druckluft beaufschlagbaren Behälter relativ großen Druckschwankungen unterworfen. Sie kann somit kaum bzw. nur mit relativ großem technischen Aufwand zur Selbstüberwachung des Druckes und der Durchflußmengen oder der Detektion von Leckagen herangezogen werden.

Der im Anspruch 1 angegebenen Erfindung liegt die Aufgabe zugrunde, eine Wasserversorgungseinrichtung für einen zahnärztlichen Arbeitsplatz anzugeben, die sicherstellt, daß auch an jenen Entnahmestellen, an denen die zum Schutz des Trinkwassers geforderten Sicherheitsmaßnahmen nicht realisiert werden können, ein Zurückfließen von kontaminiertem Wasser und damit eine Beeinträchtigung der Trinkwasserqualität vermieden werden kann, und zwar bereits bei der Bereitstellung der Wasserversorgung für die einzelnen Gerätschaften. Diese Aufgabe wird durch die Merkmale des Anspruch 1 gelöst.

Die vorgesehenen Trennmittel umfassen in einer vorteilhaften Version außer einen ersten Behälter, in den über einen freien Auslauf Wasser aus der Trinkwasserzuleitung eingeleitet wird, auch einen zweiten Behälter, von dem aus über einen zweiten freien Auslauf Desinfektionsflüssigkeit in den ersten Behälter geleitet werden kann. Dem Trinkwasser kann so unter Einhaltung der Sicherheitsvorschriften Desinfektionsflüssigkeit zudosiert werden.

Vorteilhaft ist es, als Druckmittelwandler zwei asynchron arbeitende, pneumatisch beaufschlagbare Hydraulikpumpen vorzusehen.

Die Vorteile der erfindungsgemäßen Anordnung sind aus den Patentansprüchen und der nachfolgenden Beschreibung von Ausführungsbeispielen entnehmbar.

Es zeigen:
- Figur 1: einen Ausschnitt aus einem hydraulischen Versorgungsplan eines zahnärztlichen Arbeitsplatzes,
- Figur 2: einen hydraulischen Schaltplan mit einer anderen Ausführungsform eines Druckwandlers,
- Figur 3: den konstruktiven Aufbau des in Figur 2 gezeigten Druckwandlers,

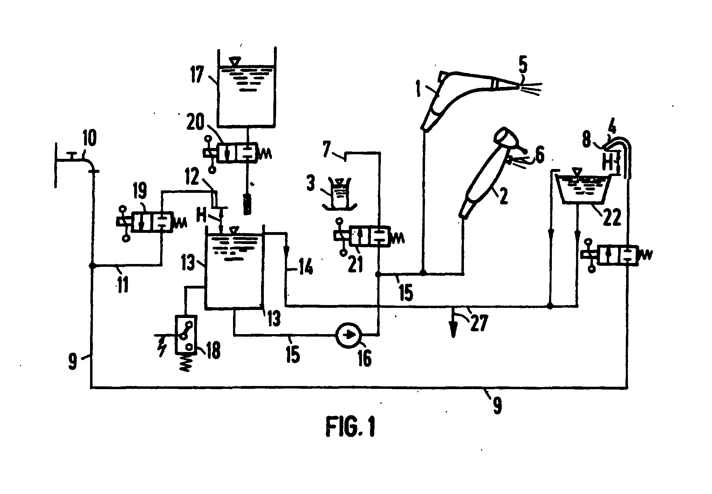

Die Figur 1 zeigt in einer schematischen Darstellung einen Ausschnitt aus einem hydraulischen Versorgungsplan für einen zahnärztlichen Arbeitsplatz. Der hier im Beispiel angeführte Arbeitsplatz enthält vier Wasser verbrauchende Gerätschaften, eine Dentalspritze 1, ein Bohrhandstück 2, eine Mundspülglasfülleinrichtung 3 sowie eine Speischalenrundspülung 4. Die zugehörigen Wasseraustritts- bzw. Entnahmestellen sind mit 5 bis 8 bezeichnet. Während die Wasseraustrittsstelle 8 der Speischalenrundspülung 4 in einer festen Zuordnung zu einer mit 22 bezeichneten Speischale steht, die es erlaubt, den in der eingangs erwähnten DIN 1988 festgelegten Sicherheitsabstand zum höchstmöglichen Wasserspiegel einzuhalten, der hier durch einen nicht näher bezeichneten Überlauf festgelegt ist, ist diese Sicherheitsmaßnahme bei den Gerätschaften 1 bis 3 nicht möglich. Demzufolge ist nur die Speischalenrundspülung 4 über eine Leitung 9 direkt mit dem Trinkwasserleitungsnetz 10 verbunden. Im Gegensatz dazu sind die Gerätschaften 1 bis 3 nicht direkt mit dem Trinkwasserleitungsnetz verbunden; vielmehr weist die zu diesen Verbrauchern führende Wasserleitung eine Trennstelle auf, indem der mit dem Trinkwasserleitungsnetz 10 verbundene Leitungsabschnitt 11 in einem Einfüllstutzen 12 endet, der einen freien Auslauf zu einem Behälter 13 bildet. Dieser freie Auslauf weist den in der DIN 1988 vorgeschriebenen Sicherheitsabstand H zum höchstmöglichen Wasserspiegel des Behälters 13 auf, der durch einen mit einem zentralen Abfluß 27 verbundenen Überlauf 14 festgelegt ist.

Der Behälter 13 hat die Aufgabe, das Wasser für die Entnahme aufzubereiten und gegebenenfalls Desinfektionsmittel aufzunehmen, welches mit freiem Auslauf aus einem weiteren Behälter 17 kommt.

Im Leitungsabschnitt 15, der von dem Behälter 13 zu den Gerätschaften 1 bis 3 führt, befindet sich eine als Druckwandler dienende Förderpumpe 16, welche Wasser mit dem erforderlichen Druck und dem notwendigen Volumen aus dem Behälter zu den Entnahmestellen fördert. Der Füllstand des Behälters 13 wird von einem Niveauschalter 18 gesteuert, der bei Unterschreiten eines bestimmten Behälterniveaus ein Magnetventil 19 betätigt, wodurch Frischwasser aus dem Leitungsnetz 10 über den freien Auslauf 12 in den Behälter geleitet wird. Die Füllhöhe kann entweder über ein Zeitschaltglied oder über einen zweiten Niveauschalter festgelegt werden. Die Steuerung des Magnetventils 20 zur Zufuhr von Desinfektionsflüssigkeit kann vorzugsweise zeitgleich mit der Zufuhr des Frischwassers erfolgen. Die Einstellung der Desinfektionsmittelmenge pro Zeiteinheit kann mit Hilfe einer pulsweiten modulierten Ansteuerung des Magnetventils oder mit Hilfe einer separaten Verstelleinrichtung erfolgen.

Die Förderpumpe 16 arbeitet stets bei Entnahme von Wasser an den Gerätschaften 1 bis 3, also beispielsweise dann, wenn das Magnetventil 21 zum Füllen des Mundglases der Füllvorrichtung 3 aktiviert wird. Entsprechendes gilt für (nicht dargestellte) Absperrventile, die in bekannter Weise in den Handstücken 1 und 2 vorhanden sind.

Als geeigneter Druckwandler, der einen konstanten Wasserdruck von etwa 2,2 bar bezüglich der Instrumente 1 und 2 sowie eine variable Fördermenge von etwa 1,5 I/min in bezug auf die Instrumente oder die Fülleinrichtung 3 zur Verfügung stellen muß, sind zwei pneumatisch beaufschlagbare und asynchron arbeitende Kolbenpumpen 28, 29 vorgesehen. Die Kolben 30, 31 der beiden Kolbenpumpen 28, 29 unterteilen den Pumpenraum jeweils in einen wasserseitigen und einen luftseitigen Raum, wobei der wasserseitige Raum über ein Rückschlagventil 32 bzw. 33 mit dem Wasserbehälter 13 und über ein weiteres Rückschlagventil 34 bzw. 35 mit der zu den Verbrauchern führenden Leitung 15 verbunden ist. Die beiden luftseitigen Räume der Kolbenpumpen 28, 29 sind über ein 4/2-Wegeventil 36 einerseits mit einem Drucklufterzeuger 37 und andererseits mit einem Abluftschalldämpfer 38 verbunden.

Die mittels Druckfedern 39, 40 belasteten Kolben 30, 31 enthalten Magnete 41, 42, die mit einem Schutzgaskontakt 43 (Reed-Kontakt) zusammenwirken. Mit einer solchen Kontaktanordnung wird das 4/2-Wegeventil 36 geschaltet. Zum Funktionsablauf sei erwähnt, daß, sobald Flüssigkeit bei einem der Verbraucher entnommen wird, die Pumpe 16 (Figur 1) zu fördern beginnt. Über das 4/2-Wegeventil 36 wird aus dem Drucklufterzeuger 37 Druckluft in den einen Pneumatikraum der Kolbenpumpe 28 geleitet. Durch den sich dort aufbauenden Luftdruck wird der Kolben bewegt und das im Hydraulikraum befindliche Wasser über die Leitung 15 zur Entnahmestelle gefördert. Sobald der Kolben 30 seine Endlage erreicht hat, löst er über den Reed-Kontakt 43 ein elektrisches Signal aus, mit dem das 4/2-Wegeventil 36 umgeschaltet wird. Nunmehr wird der andere Kolben 31 der Kolbenpumpe 29 mit Druckluft beaufschlagt; während er Flüssigkeit fördert, wird der Pneumatikraum der Kolbenpumpe 28 über den Schalldämpfer 38 entlüftet. Die Druckfeder 39 sorgt dafür, daß der Kolben 30 rasch in seine Ausgangslage zurückkehrt. Während die Luft aus der Kolbenpumpe ausgeschoben wird, saugt der Kolben gleichzeitig aus dem Behälter 13 Flüssigkeit an.

Darauf hingewiesen sei, daß anstelle eines 4/2-Wegeventils selbstverständlich auch zwei 3/2-Wegeventile vor0esehen werden können.

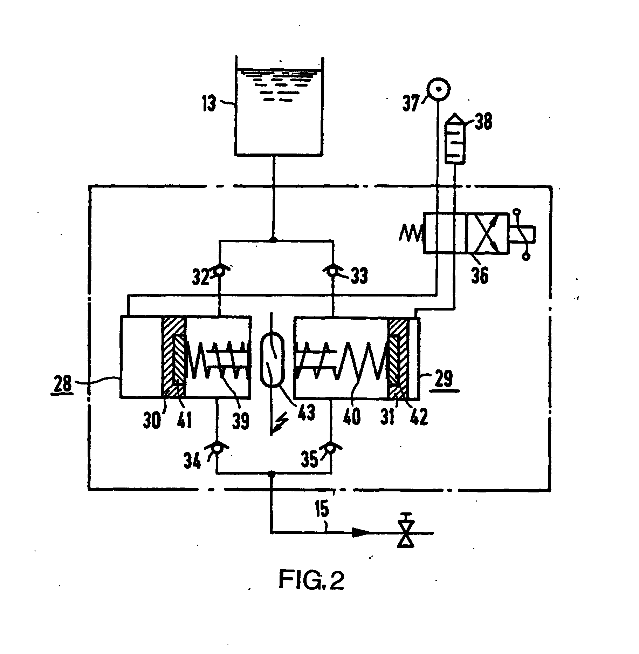

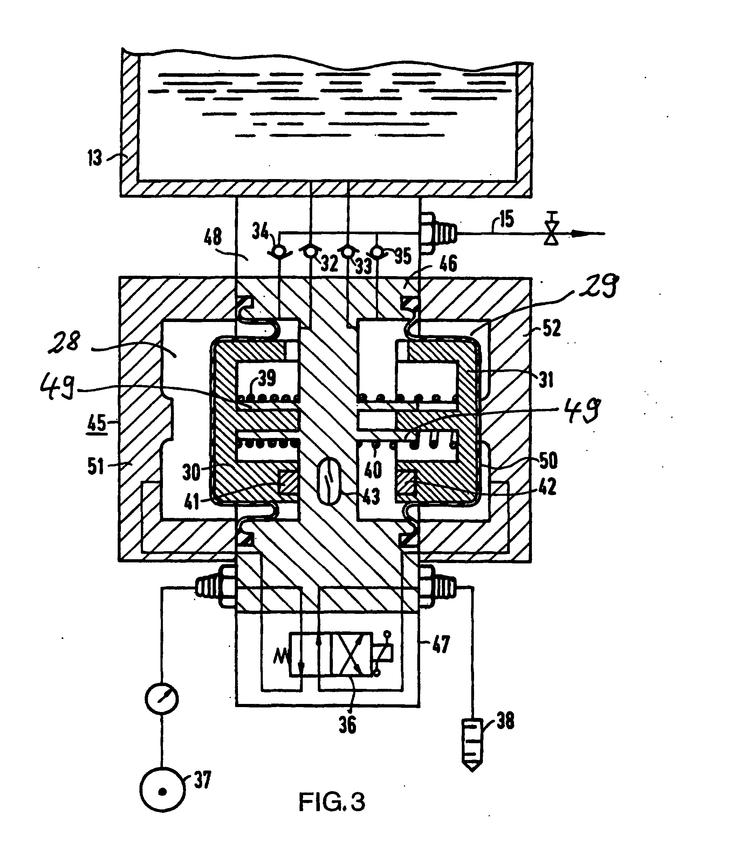

Die Figur 3 zeigt den konstruktiven Aufbau der in Figur 2 schematisch dargestellten Anordnung im Längsschnitt. Die allgemein mit 45 bezeichnete Baueinheit enthält die beiden Kolbenpumpen 28, 29, das 4/2-Wegeventil 36 sowie die vier Rückschlagventile 32 bis 35. Ein I-artiges Trägerteil 46, an dem die Ventilblöcke 47 und 48, welche einerseits das 4/2-Wegeventil 36 und andererseits die Rückschlagventile 32 bis 35 enthalten, angeflanscht sind, weist mittig seitliche Führungsansätze 49 zur Führung der topfförmig ausgebildeten Kolben 30, 31 auf. Die Führungsansätze 49 sind so ausgebildet, daß die beiden Kolben dreh- und kippsicher geführt sind. Die Endanschläge sind einerseits durch Gehäusedeckel 51, 52, andererseits durch einen Anschlag am Trägerteil 46 definiert. Die Trennung zwischen dem Hydraulik- und dem Pneumatikraum bewirkt eine Rollmembran 50, die zwischen dem Träger 46 und den beiden Gehäusedeckeln 51, 52 eingespannt ist.

Die zu und von den Ventilen führenden Leitungen sind in den beiden Ventilblöcken 47, 48, im Trägerteil 46 und in den beiden Gehäusedeckeln 51, 52 eingearbeitet. Die beiden Magnetplättchen 41, 42 sind in dem topfförmigen Kolben versenkt angeordnet; der mit ihnen zusammenwirkende Schutzkontakt ist in geeigneter Weise im Trägerteil 46 eingebaut. Die beiden Druckfedern 39, 40 sind so ausgebildet, daß durch die von Ihnen ausgeübte Federkraft die Kolben ausreichend schnell Flüssigkeit aus dem Behälter 13 ansaugen bzw. Luft aus dem Pneumatikraum verdrängen. Der Mischbehälter 13 ist zweckmäßigerweise auf den Ventilblock 48 der Baueinheit 45 aufgesetzt.

Zur Steuerung ist anzumerken, daß die Kolbenendlagen durch den Reed-Kontakt 43 erfaßt werden. Die beim Schließen des Kontakts sich bildende, steil ansteigende Spannungsflanke wird als Umschaltsignal für das Magnetventil 36 verwendet. Um Störungen bei der Ansteuerung, z.B. durch Magnetfeldüberschneidungen, hervorgerufen durch die beiden Magnete 41, 42, zu vermeiden, wird vorgeschlagen, das Magnetventil nach einer maximalen Schließdauer tn,ax des Schutzkontaktes 43, welche empirisch festgelegt werden kann, gezielt anzusteuern. Durch eine solche Zwangssteuerung können Fehlschaltungen kompensiert werden.

Unter Zugrundelegung des Faktums, daß die Hubvolumina der beiden Kolbenpumpen bekannt sind und mittels der Schaltfrequenz des ReedKontaktes das momentane Fördervolumen der beiden Pumpen bestimmt werden kann, können die Umsteuersignale des Reed-Kontaktes vorteilhafterweise gleichsam als Informations- und /oder Steuersignal für das Vorhandensein eines Durchflusses herangezogen werden, denn die beiden Kolbenpumpen laufen nur an, wenn Flüssigkeit entnommen wird. Durch diese Mehrfachausnutzung der Signale kann eine weitere Vereinfachung der Einrichtung erzielt werden.

## Patentansprüche

1. Wasserversorgungseinrichtung für einen zahnärztlichen Arbeitsplatz, der mehrere Wasseraustritts- bzw. -entnahmestellen (5 bis 8) aufweisende Gerätschaften (1 bis 4) enthält, denen aus dem Trinkwasser-Leitungsnetz (10) Wasser zugeführt wird, wobei wenigstens eine (5, 6, 7) der Entnahmestellen (5 bis 8) nicht einem nach den technischen Regeln zum Schutz von Trinkwasser geforderten Sicherheitsabstand (H) in bezug auf einen der Entnahmestellen zugeordneten Abfluß angeordnet werden kann, und in der zumindest zu dieser Entnahmestelle (5, 6, 7) führenden Leitung (11, 15) Trennmittel (12, 13) vorgesehen sind, welche einen ersten Behälter (13) umfassen, in den über einen freien Auslauf (12) Wasser aus der Trinkwasserzuleitung (11) eingeleitet wird, und welche so die Trinkwasserzuleitung im Rahmen der vorgeschriebenen Sicherheitsmaßnahmen trennen, und wobei in dem sich an die Trennmittel (12, 13) anschließenden Leitungsabschnitt(15) ein Druckwandler (16, 24, 28, 29) vorgesehen ist, welcher den Wasserdruck in diesem Leitungsabschnitt auf einen an der Entnahmestelle (5, 6, 7) benötigten Wert erhöht, **dadurch gekennzeichnet, daß**
- der Druckwandler zwei pneumatisch beaufschlagbare Kolbenpumpen (28, 29) umfaßt,
- wobei die Kolbenpumpen (28,29) je einen in einem Pumpenzylinder verdreh- und kippsicher geführten Kolben (30,31) aufweisen,
- der den Zylinder in einem wasserseitigen (Hydraulikraum) und einen luftseitigen (Pneumatikraum) Raum teilt,
- wobei die Kolbenpumpen abwechselnd durch-Beaufschlagung des Pneumatikraums eines Zylinders mit DruckluftWasser mit konstantem Druck zu einer Entnahmestelle fördern, sobald dort Wasser entnommen wird,
- oder nach Entlüftung des Pneumatikraums dieses Zylinders (30), durch Federkraft Wasser ansaugen,
- wobei die Umschaltung zwischen Beaufschlagung mit Druckluft und Entlüftung bei Erreichen der über berühungslos arbeitende Sensoren erfaßten Endlage im Hydraulikraum des jeweiligen Zylinders durch ein Wechselventil erfolgt.

2. Versorgungseinrichtung nach Anspruch 1, **dadurch gekennzeichnet, daß** die Umschaltung zwischen Beaufschlagung mit Druckluft und Entlüftung durch ein Ventil erfolgt, sobald der Wasser fördernde Kolben ein Reed-Relais aktiviert.

3. Versorgungseinrichtung nach Anspruch 2, **dadurch gekennzeichnet, daß** in den Kolben (30, 31) Dauermagnete eingebaut sind, welche das Reed-Relais aktivieren können.

4. Versorgungseinrichtung nach Anspruch 2, **dadurch gekennzeichnet, daß** die beim Schließen der Reed-Kontakte auftretenden Spannungsspitzen als Umschaltsignal für ein Magnetventil (36) verwendet werden.

5. Versorgungseinrichtung nach Anspruch 4, **dadurch gekennzeichnet, daß** zur Kompensation von Fehlschaltungen das Magnetventil (36) nach einer zeitlich festgelegten Schließdauer (tmaX) der Reed-Kontakte (43) zwangsgesteuert wird.

6. Versorgungseinrichtung nach mindestens einem der Ansprüche 1 bis 5, **dadurch gekennzeichnet, daß** die Kolben (30, 31) topfförmig ausgebildet sind und als Trennwand zwischen dem Hydraulik- und Pneumatikraum eine im Pumpengehäuse eingespannte Rollmembran (50) vorgesehen ist.

7. Versorgungseinrichtung nach mindestens einem der Ansprüche 1 bis 6, **dadurch gekennzeichnet, daß** die Kolben in einem Pumpengehäuse (46, 51, 52) einander gegenüberliegend angeordnet sind.

8. Versorgungseinrichtung nach Anspruch 1, **dadurch gekennzeichnet, daß** ein zweiter Behälter (17) vorgesehen ist, von dem aus, vorzugsweise über einen freien Auslauf, Desinfektionsmittel in den ersten Behälter (13) geleitet werden kann.

9. Versorgungseinrichtung nach Anspruch 8, **dadurch gekennzeichnet, daß** mit dem ersten Behälter (13) mindestens ein Niveauschalter (18) zusammenwirkt, über den die Wasserzufuhr in den Behälter (13) und gegebenenfalls die Zufuhr von Desinfektionsmittel aus dem Behälter (17) gesteuert wird.

10. Versorgungseinrichtung nach Anspruch 8 oder 9, **dadurch gekennzeichnet, daß** die Zufuhr des Desinfektionsmittels mittels pulsweitenmodulierter Ansteuerung eines Magnetventils (20) oder mit Hilfe einer separaten Verstelleinrichtung erfolgt.

## Claims

1. Water supply device for a dental work station which comprises several appliances (1 to 4) having water outlet or withdrawal locations (5 to 8), which appliances are supplied with water from the drinking water supply system (10), where at least one (5, 6, 7) of the withdrawal locations (5 to 8) cannot be arranged at a safe distance (H) from a drain assigned to the withdrawal locations, said safe distance being required according to the technical regulations for protecting drinking water, and where isolating means (12, 13) are provided in the line (11, 15) leading at least to this withdrawal location (5, 6, 7), which isolating means comprise a first container (13) into which water from the drinking water feed line (11) is introduced via a free outlet (12), and which thus isolate the drinking water feed line within the framework of the prescribed safety measures, and where a pressure transducer (16, 24, 28, 29) is provided in the line section (15) following the isolating means (12, 13), said pressure transducer increasing the water pressure in this line section to a value required at the withdrawal location (5, 6, 7), **characterized in that**
- the pressure transducer comprises two pneumatically actuated piston pumps (28, 29),
- the piston pumps (28, 29) each have a piston (30, 31) guided securely against twisting and tilting in a pump cylinder,
- which divides the cylinder into a water-side space (hydraulic space) and an air-side space (pneumatic space),
- the piston pumps alternately delivering water at constant pressure to a withdrawal location as soon as water is withdrawn there, by means of the pneumatic space of a cylinder being acted upon by compressed air,
- or, after air has been removed from the pneumatic space of this cylinder (30), sucking in water via a spring force,
- the switching between compressed-air actuation and air removal being effected by a change-over valve when the end position in the hydraulic space of the respective cylinder, which position is detected via contact-free sensors, is reached.

2. Supply device according to Claim 1, **characterized in that** the switching between compressed-air actuation and air removal is effected by a valve as soon as the piston delivering water activates a reed relay.

3. Supply device according to Claim 2, **characterized in that** permanent magnets which can activate the reed relay are built into the pistons (30, 31).

4. Supply device according to Claim 2, **characterized in that** the voltage peaks which occur on closure of the reed contacts are used as a switching signal for a solenoid valve (36).

5. Supply device according to Claim 4, **characterized in that**, in order to compensate for faulty switching, the solenoid valve (36) is forcibly driven after a chronologically defined closure time (tmax) of the reed contacts (43).

6. Supply device according to at least one of Claims 1 to 5, **characterized in that** the pistons (30, 31) are of pot-shaped design, and a roller diaphragm (50) clamped in the pump housing is provided as a partition between the hydraulic space and the pneumatic space.

7. Supply device according to at least one of Claims 1 to 6, **characterized in that** the pistons are arranged lying opposite one another in a pump housing (46, 51, 52).

8. Supply device according to Claim 1, **characterized in that** a second container (17) is provided from which disinfectant can be conducted to the first container (13), preferably via a free outlet.

9. Supply device according to Claim 8, **characterized in that** at least one level switch (18) via which the water supply to the container (13) and, if necessary, the supply of disinfectant from the container (17) is controlled cooperates with the first container (13).

10. Supply device according to Claim 8 or 9, **characterized in that** the supply of disinfectant is effected by means of pulse-width-modulated driving of a solenoid valve (20) or with the aid of a separate adjustment device.

## Revendications

1. Dispositif d'alimentation en eau pour un poste de travail dentaire qui comporte plusieurs ustensiles (1 à 4) qui ont des points de sortie ou de prélèvement d'eau (5 à 8) qui sont alimentés en eau à partir du réseau d'eau potable (10), au moins l'un (5,6,7) des points de prélèvement (5 à 8) ne pouvant pas, comme l'exige la réglementation technique en matière de protection de l'eau potable, être disposé à une distance de sécurité (H) d'une évacuation associée à l'un des points de prélèvement, et dans la canalisation (11,15) qui aboutit au moins à ce point de prélèvement (5,6,7) sont prévus des moyens (12,13) de séparation qui comprennent un premier récipient (13), dans lequel de l'eau est introduite par l'intermédiaire d'une sortie libre (12), à partir de la canalisation d'amenée d'eau potable (11), et de sorte que soit séparée la canalisation d'amenée d'eau potable dans le cadre des dispositions de sécurité prescrites, et dans le tronçon de canalisation (15) qui se raccorde aux moyens de séparation (12,13), il est prévu un transducteur de pression (16;24;28,29), qui augmente la pression d'eau dans ce tronçon de canalisation à une valeur nécessaire au point de prélèvement (5,6,7), **caractérisé en ce que**
le transducteur de pression comporte deux pompes (28,29) à piston qui peuvent être alimentées pneumatiquement,
les pompes (28,29) à piston comportant chacune un piston (30,31) guidé sans possibilité de rotation et de basculement dans un cylindre de pompe,
piston qui subdivise le cylindre en une chambre côté eau (chambre hydraulique) et en une chambre côté air (chambre pneumatique),
les pompes à piston, en alternance
- par alimentation de la chambre pneumatique du cylindre en air comprimé,
- envoyant de l'eau à pression constante à un point de prélèvement,
- dès que de l'eau y est prélevé ou
- après évacuation de l'air de la chambre pneumatique de ce cylindre aspirant de l'eau par une force élastique,
la commutation entre l'alimentation en air comprimé et l'évacuation de l'air au moment où est atteinte la position d'extrémité dans la chambre hydraulique du cylindre respectif, position d'extrémité détectée par des capteurs fonctionnant sans contact, s'effectuant par une soupape à alternance.

2. Dispositif d'alimentation suivant la revendication 1, **caractérisé en ce que** la commutation entre l'alimentation en air comprimé et l'évacuation s'effectue par une soupape, dès que le piston acheminant l'eau a activé un dispositif de contact Reed.

3. Dispositif d'alimentation suivant la revendication 2, **caractérisé par le fait que** dans les pistons (30, 31) sont montés des aimants permanents (41,42), qui peuvent activer le dispositif de contact Reed.

4. Dispositif d'alimentation suivant la revendication 3, **caractérisé par le fait que** les pointes de tension, qui apparaissent lors de la fermeture des lames de contact Reed, sont utilisées en tant que signal de commutation pour une électrovanne (36).

5. Dispositif d'alimentation suivant la revendication 4, **caractérisé par le fait que** pour la compensation de commutations erronées, l'électrovanne (36) est commandée selon une commande forcée après une durée de fermeture (tₘₐₓ), fixée dans le temps, du dispositif de contact Reed (43).

6. Dispositif d'alimentation suivant l'une des revendications 1 à 5, **caractérisé par le fait que** les pistons (30,32) sont réalisés en forme de pots et qu'il est prévu, comme paroi de séparation entre la chambre hydraulique et la chambre pneumatique, une membrane roulante (50), encastrée dans le cylindre de pompe.

7. Dispositif d'alimentation suivant l'une des revendications 1 à 6, **caractérisé par le fait que** les pistons (30,31) sont disposés en opposition mutuelle dans un cylindre (46,51,52) de pompe.

8. Dispositif d'alimentation suivant la revendication 1, **caractérisé par le fait qu'**il est prévu un second récipient (17), à partir duquel un agent désinfectant peut être envoyé dans le premier récipient (13), de préférence par l'intermédiaire d'une sortie libre.

9. Dispositif d'alimentation suivant la revendication 8, **caractérisé par le fait qu'**avec le premier récipient (13) coopère au moins un interrupteur de niveau (18), par l'intermédiaire duquel l'envoi d'eau et éventuellement l'envoi d'agent désinfectant à partir du récipient (17) sont commandés.

10. Dispositif d'alimentation suivant la revendication 8 ou 9, **caractérisé par le fait que** l'envoi de l'agent désinfectant s'effectue à l'aide d'une commande à modulation en largeur d'impulsions, d'une électrovanne (20) ou à l'aide d'un dispositif de réglage séparé.
